# EUROPEAN PATENT APPLICATION

(11) **EP 4 746 143 A1**
(43) Date of publication of application: **20.05.2026**
(21) Application number: 25213786.4
(22) Date of filing: 05.11.2025
(51) Int. Cl.: H01M 50/148, H01M 50/183, H01M 50/552, H01M 50/562

(54) **BATTERY CELL**

(30) Priority: 18.11.2024 KR 20240164181
(71) Applicant: SK On Co., Ltd., Seoul 03161 (KR)
(72) Inventor: LEE, Jae Myoung, 34124 Daejeon (KR); KIM, Min Seong, 34124 Daejeon (KR); LEE, Yong Seok, 34124 Daejeon (KR); KIM, Byung Mook, 34124 Daejeon (KR); NAM, Hai Sol, 34124 Daejeon (KR); PARK, Kyung Tae, 34124 Daejeon (KR); PARK, Byeong Hyeon, 34124 Daejeon (KR)
(74) Representative: Stolmár & Partner Patentanwälte PartG mbB

(57) **Abstract**

The present disclosure relates to a battery cell including: an electrode assembly comprising a first electrode, a second electrode having a polarity different from that of the first electrode, and a separator interposed between the first electrode and the second electrode; a case configured to accommodate the electrode assembly; a through-hole penetrating one end surface among both end surfaces of the case; a terminal portion inserted into the through-hole, electrically connected to one of the first electrode and the second electrode; a ring-shaped gasket disposed between the terminal portion and the placement region; and a ring-shaped first sealing portion disposed between the gasket and the placement region, the first sealing portion being formed of a material more flexible than the case and the gasket.

## Description

### BACKGROUND OF THE INVENTION

### 1. Field

The present disclosure relates to a battery cell (or a secondary battery). More particularly, the present disclosure relates to a battery cell configured to prevent leakage of an electrolyte.

### 2. Description of the Related Art

In a conventional battery cell, a riveting method is used to form a terminal portion. That is, in a conventional method of manufacturing a battery cell, the terminal portion is inserted into a through-hole formed in one surface of a case that defines the outer shape of the battery cell, and is fixed to the case by the riveting method. In addition, in the conventional method of manufacturing a battery cell, a gasket is used to prevent leakage of an electrolyte through a gap between the terminal portion and the through-hole. The gasket may electrically insulate the terminal portion from the case while also performing a function of preventing leakage of the electrolyte. Generally, the gasket may be made of a polymer material.

However, the gasket may be locally and unevenly adhered to the terminal portion or to a periphery of the through-hole, which may cause defects in the battery cell. In order to seal between the gasket and the terminal portion, and between the gasket and the periphery of the through-hole, it is necessary to apply a high compressive force to the gasket disposed between the terminal portion and the case. However, considering that the case and the terminal portion are generally made of aluminum, the case and the terminal portion need to have increased thicknesses to withstand such high compressive force. Since the outer dimensions of the case are fixed, increasing the thickness results in a reduction in the internal space of the case, which may ultimately make it difficult to increase the energy density of the battery cell.

### SUMMARY OF THE INVENTION

First, according to one aspect of the present disclosure, a technical problem to be solved is to improve the quality of the battery cell.

Second, according to another aspect of the present disclosure, a technical problem to be solved is to improve the energy density of the battery cell.

Meanwhile, the battery cell according to the present disclosure may be widely applied to fields of green technology, including electric vehicles (EVs), battery charging stations, and energy storage systems (ESS), as well as photovoltaics and wind power that utilize batteries. In addition, the battery cell according to the present disclosure may be used in eco-friendly mobility, including electric vehicles and hybrid vehicles, to reduce air pollution and greenhouse gas emissions and thereby prevent climate change.

One aspect of the present disclosure provides a battery cell may comprise: an electrode assembly including a first electrode, a second electrode having a polarity different from that of the first electrode, and a separator interposed between the first electrode and the second electrode; a case configured to accommodate the electrode assembly; a through-hole penetrating one end surface among both end surfaces of the case; a terminal portion inserted into the through-hole, electrically connected to one of the first electrode and the second electrode, and protruding outward from the case, the terminal portion extending in a radial direction of the through-hole such that both end portions face each other with a placement region, which is a region adjacent to a periphery of the through-hole including an inner circumferential surface of the through-hole, interposed therebetween; a ring-shaped gasket disposed between the terminal portion and the placement region; and a ring-shaped first sealing portion disposed between the gasket and the placement region and formed of a material more flexible than the case and the gasket.

In one embodiment, the battery cell according to the present disclosure may further include a ring-shaped second sealing portion disposed between the terminal portion and the gasket, the second sealing portion being formed of a material more flexible than the terminal portion and the gasket.

In one embodiment, the terminal portion may be rivet-coupled to the through-hole.

In one embodiment, the terminal portion may include: a body portion inserted into the through-hole; a head portion connected to one end among both end portions of the body portion, the one end being provided on an outer side of the case, the head portion having an outer diameter greater than a diameter of the through-hole; and a tail portion connected to at least a part of the body portion that is provided on an inner side of the case, the tail portion being formed to extend in a radial direction such that a radius thereof is greater than a radius of the through-hole.

In one embodiment, the gasket may be in contact with the head portion, the body portion, and the tail portion.

In one embodiment, the first sealing portion may be disposed between the tail portion and the placement region.

In one embodiment, the battery cell according to the present disclosure may further include a ring-shaped second sealing portion disposed between the tail portion and the gasket, the second sealing portion being formed of a material more flexible than the terminal portion and the gasket, and the first sealing portion may be disposed to face the second sealing portion with the gasket interposed therebetween.

In one embodiment, the battery cell according to the present disclosure may further include a first current collector disposed between the electrode assembly and the terminal portion, and electrically connecting the first electrode and the terminal portion.

In addition, the battery cell according to the present disclosure may further include a second current collector disposed between the other end surface among both end surfaces of the case and the electrode assembly.

In one embodiment, the gasket and the first sealing portion may be compressed between the terminal portion and the case to reduce volume.

In one embodiment, the gasket may include: a ring body forming a communication hole into which the terminal portion is inserted; and a first groove portion formed in a groove shape in the ring body along a circumferential direction of the communication hole, the first groove portion being configured to receive the first sealing portion.

In one embodiment, the battery cell according to the present disclosure may further include a ring-shaped second sealing portion disposed between the terminal portion and the gasket, and the gasket may further include a second groove portion formed in a groove shape along a circumferential direction of the communication hole, the second groove portion being formed in parallel with the first groove portion and configured to receive the second sealing portion.

First, according to one embodiment of the present disclosure, the quality of the battery cell may be improved.

Second, according to another embodiment of the present disclosure, a technical problem to be solved is to improve the energy density of the battery cell.

### BRIEF DESCRIPTION OF THE DRAWINGS

FIG. 1 is an example of a battery cell according to the present disclosure.
FIG. 2 is an example of an electrode assembly according to the present disclosure.
FIG. 3 is an enlarged view of one cross-section of the battery cell according to the present disclosure.
FIG. 4 is an enlarged view of another cross-section of the battery cell according to the present disclosure.
FIG. 5 is an enlarged view of a portion where a first sealing portion is disposed according to the present disclosure.
FIG. 6 is an enlarged view of a portion where a second sealing portion is disposed according to the present disclosure.
FIG. 7 illustrates a gasket according to the present disclosure.

### DETAILED DESCRIPTION

Hereinafter, preferred embodiments of the present disclosure will be described in detail with reference to the accompanying drawings. The configuration and control method of the apparatus described below are provided only for the purpose of explaining embodiments of the present disclosure and are not intended to limit the scope of the present disclosure. Reference numerals used throughout the specification denote the same components.

Meanwhile, in the present disclosure, the terms battery, secondary battery, and cell are used interchangeably to refer to a battery cell that is capable of charging and discharging.

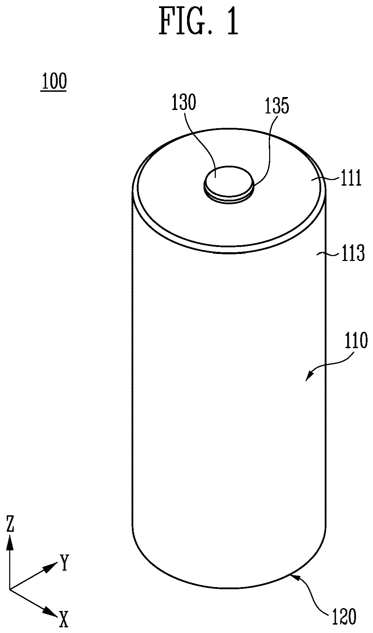

FIG. 1 is an example of a battery cell according to the present disclosure.

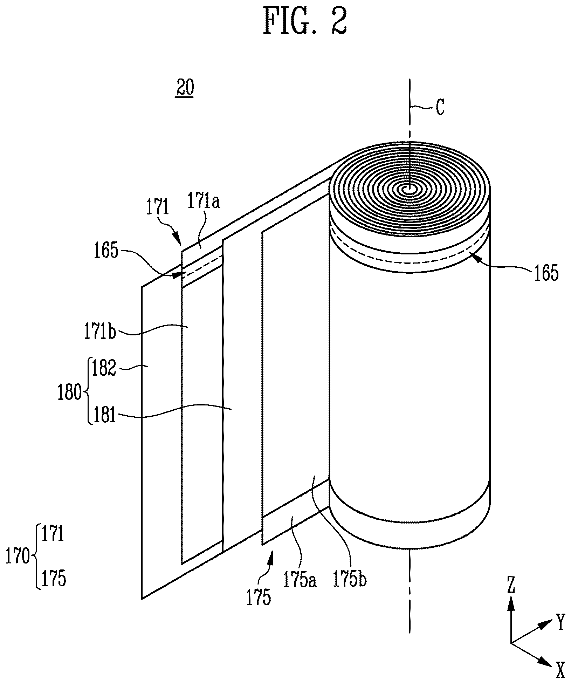

Referring to FIG. 1, a battery cell 100 manufactured by a battery manufacturing apparatus according to the present disclosure may comprise: a case 110 configured to accommodate an electrode assembly 20 (see FIG. 2) that generates or stores electrical energy; and a terminal portion 130 electrically connected to the electrode assembly 20 and protruding outward from the case.

The case 110 may form the outer shape of the battery cell 100. Although FIG. 1 illustrates the battery cell 100 as being cylindrical, the shape of the battery cell according to the present disclosure is not limited thereto. That is, the battery cell 100 according to the present disclosure may be applied not only to prismatic battery cells but also to various other types of battery cells.

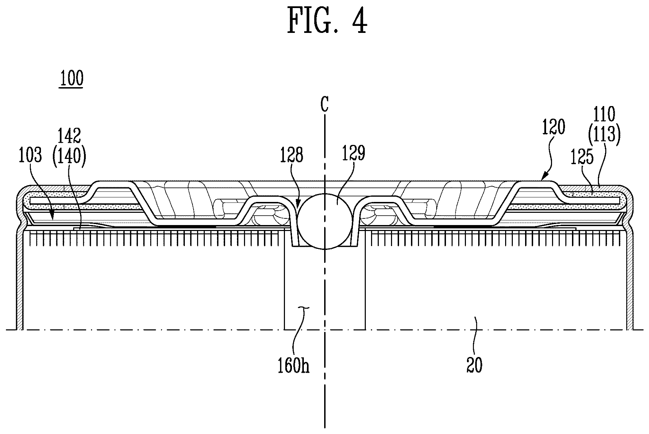

The case 110 may include an opening 103 (see FIG. 4) at one end surface, and the electrode assembly 20 may be accommodated through the opening 103. Referring to FIG. 1, the opening 103 may be positioned in a direction opposite to the terminal portion 130. The case 110 may further include a cap assembly 120 coupled to one end surface of the case 110 and configured to seal the opening 103.

The terminal portion 130 and the cap assembly 120 may be located at opposite ends and face each other.

That is, since the case 110 is formed by deep drawing a disk having a circular shape, one end of the case 110 may be open, and the other end may be closed. The case 110 may include a side portion 113 forming a circumferential surface and a flat portion 111 forming the other end of the case 110.

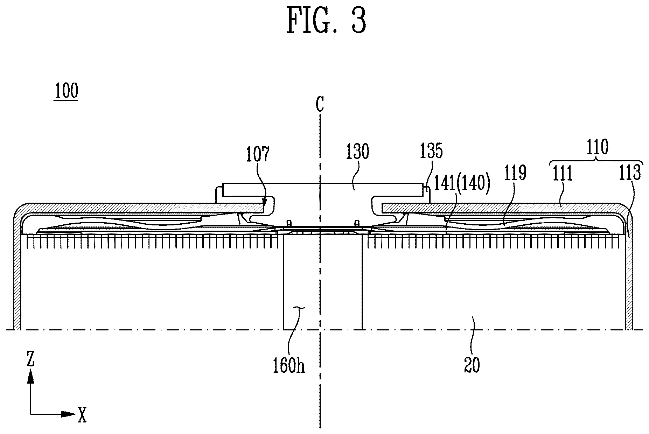

The terminal portion 130 may be positioned on the flat portion 111, which faces the opening 103 or the cap assembly 120. The battery cell 100 may further include a through-hole 107 (see FIG. 3) formed to penetrate the flat portion 111, and the terminal portion 130 may be inserted into the through-hole 107.

Since the terminal portion 130 has electrical polarity, the battery cell 100 may further include a gasket 135 disposed between the case 110 and the terminal portion 130 to electrically insulate the terminal portion 130 from the case 110.

FIG. 2 is an example of an electrode assembly according to the present disclosure.

Specifically, FIG. 2 shows a partially disassembled view of the wound electrode assembly 20. The electrode assembly 20 may include an electrode 170 and a separator 180.

The electrode 170 may include a first electrode 171 and a second electrode 175. The first electrode 171 and the second electrode 175 may have different polarities. For example, the first electrode 171 may be a negative electrode and the second electrode 175 may be a positive electrode. In another example, the first electrode 171 may be a positive electrode and the second electrode 175 may be a negative electrode.

The electrode 170 may be a plate on which an active material is coated in a certain region. In one embodiment, the first electrode 171 may include a first uncoated portion 171a to which a first active material is not applied, and a first coated portion 171b to which the first active material is applied. The second electrode 175 may include a second uncoated portion 175a to which a second active material is not applied, and a second coated portion 175b to which a second active material is applied.

In one embodiment, the first uncoated portion 171a may be formed at an upper end of the first coated portion 171b. The second uncoated portion 175a may be formed at a lower end of the second coated portion 175b. When the first electrode 171 is a negative electrode, the first active material may be a negative electrode active material. When the second electrode 175 is a positive electrode, the second active material may be a positive electrode active material. The positive electrode active material may include at least one selected from lithium transition metal oxides, nickel-cobalt-manganese-based lithium oxides, and the like. The negative electrode active material may include at least one selected from carbon materials, lithium, lithium metal compounds, silicon, silicon compounds, tin, tin compounds, and the like.

Meanwhile, the above-described embodiment is only an example, and the positive electrode active material and the negative electrode active material may be implemented in various forms without limitation in type.

In one embodiment, the electrode 170 may further include an insulating coating portion 165 formed at a boundary between the uncoated portion and the coated portion. The insulating coating portion 165 may include an insulating material. The insulating coating portion 165 may improve mechanical strength at a bent region of the uncoated portion to form a flag.

The separator 180 may be disposed between the first electrode 171 and the second electrode 175 to separate them from each other.

The separator 180 may include an inner separator 181 disposed between the first electrode 171 and the second electrode 175, and an outer separator 182 disposed on an outer side. The separator 180 may include an insulating material. The separator 180 may block contact between the first electrode 171 and the second electrode 175 and electrically separate them.

The electrode assembly 20 may be wound. In one embodiment, the electrode 170 and the separator 180 may be wound around a central axis C in a stacked state. Here, the central axis C may correspond to a height direction (e.g., a Z-axis direction). For example, the outer separator 182, the first electrode 171, the inner separator 181, and the second electrode 175 may be stacked and wound around the central axis C.

The electrode 170 may also include a flag (not shown). In one embodiment, the flag may be defined as a region from a bent portion of the uncoated portion to an end thereof, when a portion of the uncoated portion is bent. In one embodiment, the uncoated portion may be bent at an angle of 90 degrees or less with respect to an XY plane. In another embodiment, the uncoated portion may be notched into a plurality of segments, and the segments may be bent sequentially from an inner segment to an outer segment.

The flag may include a first flag (not shown) and a second flag (not shown). For example, the first flag may be formed by bending the first uncoated portion 171a of the first electrode 171 inward toward the central axis C, and the second flag may be formed by bending the second uncoated portion 175a of the second electrode 175 inward toward the central axis C.

. FIG. 3 is an enlarged view of one cross-section of the battery cell according to the present disclosure.

More specifically, FIG. 3 illustrates a cross-sectional view of a region adjacent to the flat portion 111.

The battery cell 100 may accommodate the electrode assembly 20 therein. The electrode assembly 20 may have a shape corresponding to the cylindrical case 110 or the side portion 113. That is, the electrode assembly 20 may be in the form of a roll in which the first electrode 171, the second electrode 175, and a separator 180 disposed between the first electrode 171 and the second electrode 175 are wound. Accordingly, a central axis C of the electrode assembly 20 may be the same as a central axis C of the case 110. Therefore, in the present disclosure, the term "central axis" is used without distinction unless otherwise specified.

The electrode assembly 20 may include a central hole 160h in a region adjacent to the central axis C. This is to prevent damage to the electrode assembly 20 during winding, taking into account the degree of bending (i.e., radius of curvature) of the electrode assembly.

The battery cell 100 may include a current collector 140 electrically connecting the terminal portion 130 and the electrode assembly 20. The current collector 140 may electrically connect the first electrode 171 and the terminal portion 130.

To this end, the current collector 140 may be joined to the first electrode 171 and the terminal portion 130 by welding.

To provide electrical insulation between the flat portion 111 and the current collector 140, the battery cell 100 may further include an insulating cover 119 disposed between the flat portion 111 and the current collector 140.

FIG. 4 is an enlarged view of another cross-section of the battery cell according to the present disclosure.

More specifically, FIG. 4 illustrates a cross-sectional view of a region adjacent to the cap assembly 120.

The battery cell 100 may further include a current collector 140 disposed between the cap assembly 120 and the electrode assembly 20.

That is, the battery cell 100 according to the present disclosure may further include a first current collector 141 disposed between the electrode assembly 20 and the terminal portion 130, and configured to electrically connect the first electrode 171 and the terminal portion 130.

In addition, the battery cell 100 according to the present disclosure may further include a second current collector 142 disposed between the other end surface among both end surfaces of the case 110 and the electrode assembly 20.

More specifically, referring to FIGS. 3 and 4, the current collector 140 may include the first current collector 141 electrically connecting the first electrode and the terminal portion 130, and the second current collector 142 electrically connecting the second electrode and the side portion 113. Alternatively, the second current collector 142 may electrically connect the cap assembly 120 and the electrode assembly 20.

The battery cell 100 may further include an insulating member 125 configured to electrically insulate the cap assembly 120 from the case 110.

The cap assembly 120 may have a disk shape centered on the central axis C. The cap assembly 120 may further include an injection hole 128 penetrating the cap assembly 120 along the central axis C.

The injection hole 128 may be used to inject an electrolyte into the case 110. The battery cell 100 may further include a ball-shaped sealing member 129 configured to close the injection hole 128 after electrolyte injection.

The electrolyte EL may be injected through the injection hole 128 after the cap assembly 120 is coupled to the case 110 and before the injection hole 128 is closed. Alternatively, the electrolyte EL may be injected into the case 110 through the opening 103 before the cap assembly 120 is coupled.

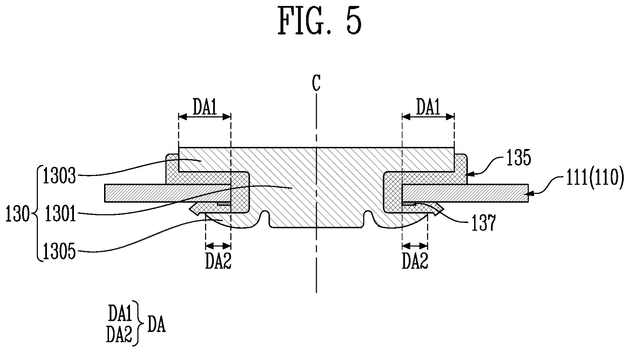

FIG. 5 is an enlarged view of a portion where a first sealing portion is disposed according to the present disclosure.

As described above, the battery cell according to the present disclosure may comprise: an electrode assembly 20 including a first electrode 171, a second electrode 175 having a polarity different from the first electrode 171, and a separator 180 configured to separate the first electrode 171 and the second electrode 175; a cylindrical case 110 configured to accommodate the electrode assembly 20; a through-hole 107 formed to penetrate one end surface of both end surfaces of the case 110; a terminal portion 130 having a part inserted into the through-hole 107 and electrically connected to either the first electrode 171 or the second electrode 175; a ring-shaped gasket 135 disposed between the terminal portion 130 and the periphery of the through-hole 107; and a ring-shaped first sealing portion 137 disposed between the gasket 135 and the periphery of the through-hole 107, and formed of a material more flexible than the case 110 and the gasket 135.

As used herein, the term "ring-shaped" refers to a shape having a hole at its center, and having a difference between the outer diameter and the inner diameter greater than or equal to the length (or thickness) along the central axis of the hole.

Referring to FIG. 5, the term "placement region (DA)" in the present disclosure may refer to a region of the case 110 adjacent to the through-hole 107, including the inner circumferential surface of the through-hole 107. Alternatively, since the through-hole 107 is located at one end surface of the case 110, the placement region DA may be a portion of the end surface of the case 110.

As used herein, the term "radial direction" may refer to all directions extending from the virtual central axis C of the through-hole 107.

That is, the battery cell according to the present disclosure may comprise: an electrode assembly 20 including a first electrode 171, a second electrode 175 having a polarity different from the first electrode 171, and a separator 180 interposed between the first electrode 171 and the second electrode 175; a cylindrical case 110 configured to accommodate the electrode assembly 20; a through-hole 107 formed to penetrate one end surface of both end surfaces of the case 110; a terminal portion 130 inserted into the through-hole 107 and electrically connected to either the first electrode 171 or the second electrode 175, the terminal portion 130 protruding outward from the case 110 and extending in the radial direction of the through-hole 107 with both ends facing each other across a placement region DA adjacent to the periphery of the through-hole 107 including the inner circumferential surface thereof; a ring-shaped gasket 135 disposed between the terminal portion 130 and the placement region DA; and a ring-shaped first sealing portion 137 disposed between the gasket 135 and the placement region DA, and formed of a material more flexible than the case 110 and the gasket 135.

The terminal portion 130 may be rivet-coupled to the through-hole 107, but is not limited thereto.

The terminal portion 130 may comprise: a body portion 1301 inserted into the through-hole 107; a head portion 1303 connected to one end of the body portion 1301 located on the outer side of the case 110, the head portion 1303 having an outer diameter greater than the diameter of the through-hole 107; and a tail portion 1305 connected to the other end of the body portion 1301 located on the inner side of the case 110, and extending in the radial direction such that at least part of it is larger than the radius of the through-hole 107.

The length or radius of the tail portion 1305 may be greater than the radius of the through-hole 107.

The placement region DA may include a first placement region DA1 facing the head portion 1303, and a second placement region DA2 facing the tail portion 1305. The first placement region DA1 and the second placement region DA2 may have the same ring shape but different sizes.

The terminal portion 130 and the through-hole 107 may be circular at one end surface to prevent stress concentration in a specific direction.

The terminal portion 130 may initially have a pin shape before being inserted into the through-hole 107, and after insertion, the length of the pin shape may be reduced along the axial direction, and part of the diameter of the pin shape may be increased by deformation.

That is, the head portion 1303 and the tail portion 1305 may be formed by deforming part of the body portion 1301 in the radial direction.

The head portion 1303 may be electrically connected to the outside on the outer side of the case 110, and the tail portion 1305 may be electrically connected to the electrode assembly 20 or the first current collector 141 on the inner side of the case 110.

Therefore, when the gasket 135 is disposed between the terminal portion 130 and the periphery of the through-hole of the case 110, the gasket 135 may contact the head portion 1303, the body portion 1301, and the tail portion 1305 by deformation of the terminal portion 130 during assembly.

The gasket 135 may be provided in a ring shape so as to surround the body portion 1301.

Meanwhile, when the terminal portion 130 is coupled to the case 110, the terminal portion 130 and the case 110 may press the gasket 135. This is to ensure the airtightness of the gasket 135. That is, the gasket 135 may electrically insulate the terminal portion 130 from the case 110, and at the same time, minimize or block leakage of electrolyte accommodated inside the case 110 through the through-hole 107.

However, since the case 110 and the terminal portion 130 are formed of aluminum material, the gasket 135 cannot be compressed to the maximum extent. Even if the gasket 135 is formed of a polymer material, the materials of the case 110 and the terminal portion 130 are relatively low in strength compared to metals such as steel. Accordingly, in order to maximize the airtightness for sealing the through-hole with the terminal portion 130 and the gasket 135 without changing the thickness or size of the case 110 and the terminal portion 130, the battery cell 100 according to the present disclosure may include the first sealing portion 137.

The first sealing portion 137 may be formed of a material softer than the gasket 135. Accordingly, the gasket 135 and the first sealing portion 137 may be compressed between the terminal portion 130 and the case 110, thereby reducing their volume.

Through this, the gasket 135 and the first sealing portion 137 may be compressed, thereby allowing the gasket 135 and the first sealing portion 137, and the first sealing portion 137 and the case 110, to be more closely adhered.

Accordingly, the battery cell 100 according to the present disclosure may reduce defects due to electrolyte leakage. In addition, since the use of the first sealing portion 137 does not entail a change in thickness or size of the case 110 and the terminal portion 130, it is possible to compactly utilize the internal space of the case 110 and maximize the energy density of the battery cell 100.

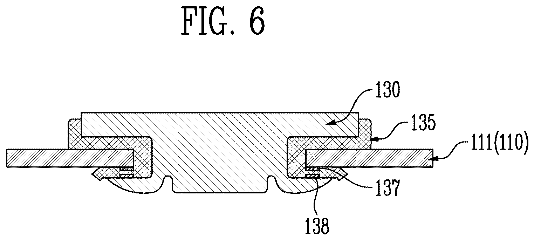

FIG. 6 is an enlarged view of a portion where a second sealing portion is disposed according to the present disclosure.

The battery cell according to the present disclosure may further include a ring-shaped second sealing portion 138 that is disposed between the terminal portion 130 and the gasket 135 and formed of a material more flexible than the terminal portion 130 and the gasket 135.The battery cell according to the present disclosure may further include a ring-shaped second sealing portion 138 that is disposed between the terminal portion 130 and the gasket 135 and formed of a material more flexible than the terminal portion 130 and the gasket 135.

That is, the battery cell according to the present disclosure may further include the ring-shaped second sealing portion 138 disposed between the tail portion 1305 and the gasket 135.

If the first sealing portion 137 prevents leakage of the electrolyte through a gap between the case 110 and the gasket 135, the second sealing portion 138 may prevent leakage of the electrolyte through a gap between the terminal portion 130 and the gasket 135.

In addition, the first sealing portion 137 and the second sealing portion 138 may be spaced apart from each other with the tail portion 1305 interposed therebetween, and may be disposed to overlap along the central axis C.

That is, referring to FIG. 6, the first sealing portion 137 may be disposed to face the second sealing portion 138 with the gasket 135 interposed therebetween.

More specifically, the first sealing portion 137 may be located between the tail portion 1305 and the placement region DA. The first sealing portion 137 may be disposed to face the second sealing portion 138 with the gasket 135 interposed therebetween.

FIG. 6 illustrates that the first sealing portion 137 and/or the second sealing portion 138 is in contact with a portion of the tail portion 1305 along the radial direction of the terminal portion 130; however, the outer diameter of the first sealing portion 137 and the second sealing portion 138 may be greater than the length of the tail portion 1305 in the radial direction of the terminal portion 130.

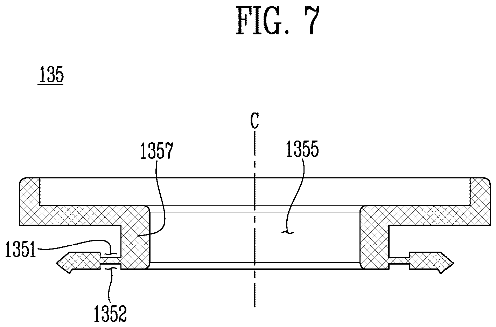

FIG. 7 illustrates a gasket according to the present disclosure.

In consideration of the ease of assembly of the first sealing portion 137 and/or the second sealing portion 138, the gasket 135 may include: a ring body 1357 forming a through-hole 1355 into which the terminal portion 130 is inserted; and a first groove portion 1351 formed in a groove shape along a circumferential direction of the through-hole 1355 in the ring body 1357, the first sealing portion 137 being located in the first groove portion 1351.

When the case 110 is cylindrical and the terminal portion 130 is located at the center of the case 110, the central axis C may coincide with the central axis of the through-hole 1355.

When the first sealing portion 137 is inserted into the first groove portion 1351, a portion thereof may protrude from the first groove portion 1351 or may form a coplanar surface with the surface in which the first groove portion 1351 is formed. This is in consideration of the compression of the first sealing portion 137 when the gasket 135 is compressed.

The battery cell 100 according to the present disclosure may further include the ring-shaped second sealing portion 138 disposed between the terminal portion 130 and the gasket 135, and the gasket 135 may further include a second groove portion 1352 formed in a groove shape along the circumferential direction of the through-hole 1355 in parallel with the first groove portion 1351, the second sealing portion 138 being located in the second groove portion 1352.

When the second sealing portion 138 is inserted into the second groove portion 1352, a portion thereof may protrude from the second groove portion 1352 or may form a coplanar surface with the surface in which the second groove portion 1352 is formed. This is in consideration of the compression of the second sealing portion 138 when the gasket 135 is compressed.

It is understood by those skilled in the art that the plurality of exemplary embodiments described above are specific examples of the following aspects.

Aspect 1. A battery cell 100 comprising: an electrode assembly 20 including a first electrode 171, a second electrode 175 having a polarity different from that of the first electrode 171, and a separator 180 interposed between the first electrode 171 and the second electrode 175; a case 110 configured to accommodate the electrode assembly 20; a through-hole 107 penetrating one of two end surfaces of the case 110; a terminal portion 130 inserted into the through-hole 107, electrically connected to one of the first electrode 171 and the second electrode 175, and protruding outward from the case 110, the terminal portion 130 extending in a radial direction of the through-hole 107 such that both end portions face each other with a placement region DA, which is a region adjacent to a periphery of the through-hole 107 including an inner circumferential surface of the through-hole107, interposed therebetween; a ring-shaped gasket 135 disposed between the terminal portion 130 and the placement region DA; and a ring-shaped first sealing portion 137 disposed between the gasket 135 and the placement region DA and formed of a material more flexible than the case 110 and the gasket 135.

Aspect 2. The battery cell 100 according to aspect 1, further comprising a ring-shaped second sealing portion 138 disposed between the terminal portion 130 and the gasket 135, the second sealing portion 138 being formed of a material more flexible than the terminal portion 130 and the gasket 135.

Aspect 3. The battery cell 100 according to any one of the previous aspects, wherein the terminal portion 130 is rivet-coupled to the through-hole 107.

Aspect 4. The battery cell 100 according to any one of the previous aspects, wherein the terminal portion 130 comprises: a body portion 1301 inserted into the through-hole 107; a head portion 1303 connected to one end among both end portions of the body portion 1301, the one end being provided on an outer side of the case 110, the head portion 1303 having an outer diameter greater than a diameter of the through-hole 107; and a tail portion 1305 connected to at least a part of the body portion 1301 that is provided on an inner side of the case 110, the tail portion 1305 being formed to extend in a radial direction such that a radius thereof is greater than a radius of the through-hole 107.

Aspect 5. The battery cell 100 according to aspect 4, wherein the gasket 135 is in contact with the head portion 1303, the body portion 1301, and the tail portion 1305.

Aspect 6. The battery cell 100 according to aspect 4, wherein the first sealing portion 137 is disposed between the tail portion 1305 and the placement region DA.

Aspect 7. The battery cell 100 according to aspect 6, further comprising a ring-shaped second sealing portion 138 disposed between the tail portion 1305 and the gasket 135, the second sealing portion 138 being formed of a material more flexible than the terminal portion 130 and the gasket 135, wherein the first sealing portion 137 is disposed to face the second sealing portion 138 with the gasket 135 interposed therebetween.

Aspect 8. The battery cell 100 according to any one of the previous aspects, further comprising a first current collector 141 disposed between the electrode assembly 20 and the terminal portion 130, and electrically connecting the first electrode 171 and the terminal portion 130.

Aspect 9. The battery cell 100 according to aspect 8, further comprising a second current collector 142 disposed between the other end surface among both end surfaces of the case 110 and the electrode assembly 20.

Aspect 10. The battery cell 100 according to any one of the previous aspects, wherein the gasket 135 and the first sealing portion 137 are compressed between the terminal portion 130 and the case 110 to reduce volume.

Aspect 11. The battery cell 100 according to any one of the previous aspects, wherein the gasket 135 comprises: a ring body 1357 forming a communication hole into which the terminal portion 130 is inserted; and a first groove portion 1351 formed in a groove shape in the ring body 1357 along a circumferential direction of the communication hole, the first groove portion 1351 being configured to receive the first sealing portion 137.

Aspect 12. The battery cell 100 according to aspect 11, further comprising a ring-shaped second sealing portion 138 disposed between the terminal portion 130 and the gasket 135, wherein the gasket 135 further comprises a second groove portion 1352 formed in a groove shape in the ring body 1357 along a circumferential direction of the communication hole, the second groove portion being formed in parallel with the first groove portion 1351 and configured to receive the second sealing portion 138.

The present disclosure may be embodied in various forms, and is not limited to the above-described embodiments. Therefore, any modified embodiment including the elements of the claims of the present disclosure should be construed as falling within the scope of the present disclosure.

## Claims

1. A battery cell 100 comprising:
an electrode assembly 20 including a first electrode 171, a second electrode 175 having a polarity different from that of the first electrode 171, and a separator 180 interposed between the first electrode 171 and the second electrode 175;
a case 110 configured to accommodate the electrode assembly 20;
a through-hole 107 penetrating one of two end surfaces of the case 110;
a terminal portion 130 inserted into the through-hole 107, electrically connected to one of the first electrode 171 and the second electrode 175, and protruding outward from the case 110, the terminal portion 130 extending in a radial direction of the through-hole 107 such that both end portions face each other with a placement region DA, which is a region adjacent to a periphery of the through-hole 107 including an inner circumferential surface of the through-hole107, interposed therebetween;
a ring-shaped gasket 135 disposed between the terminal portion 130 and the placement region DA; and
a ring-shaped first sealing portion 137 disposed between the gasket 135 and the placement region DA and formed of a material more flexible than the case 110 and the gasket 135.

2. The battery cell 100 according to claim 1, further comprising a ring-shaped second sealing portion 138 disposed between the terminal portion 130 and the gasket 135, the second sealing portion 138 being formed of a material more flexible than the terminal portion 130 and the gasket 135.

3. The battery cell 100 according to any one of the previous claims, wherein the terminal portion 130 is rivet-coupled to the through-hole 107.

4. The battery cell 100 according to any one of the previous claims, wherein the terminal portion 130 comprises:
a body portion 1301 inserted into the through-hole 107;
a head portion 1303 connected to one end among both end portions of the body portion 1301, the one end being provided on an outer side of the case 110, the head portion 1303 having an outer diameter greater than a diameter of the through-hole 107; and
a tail portion 1305 connected to at least a part of the body portion 1301 that is provided on an inner side of the case 110, the tail portion 1305 being formed to extend in a radial direction such that a radius thereof is greater than a radius of the through-hole 107.

5. The battery cell 100 according to claim 4, wherein the gasket 135 is in contact with the head portion 1303, the body portion 1301, and the tail portion 1305.

6. The battery cell 100 according to claim 4, wherein the first sealing portion 137 is disposed between the tail portion 1305 and the placement region DA.

7. The battery cell 100 according to claim 6, further comprising a ring-shaped second sealing portion 138 disposed between the tail portion 1305 and the gasket 135, the second sealing portion 138 being formed of a material more flexible than the terminal portion 130 and the gasket 135,
wherein the first sealing portion 137 is disposed to face the second sealing portion 138 with the gasket 135 interposed therebetween.

8. The battery cell 100 according to any one of the previous claims, further comprising a first current collector 141 disposed between the electrode assembly 20 and the terminal portion 130, and electrically connecting the first electrode 171 and the terminal portion 130.

9. The battery cell 100 according to claim 8, further comprising a second current collector 142 disposed between the other end surface among both end surfaces of the case 110 and the electrode assembly 20.

10. The battery cell 100 according to any one of the previous claims, wherein the gasket 135 and the first sealing portion 137 are compressed between the terminal portion 130 and the case 110 to reduce volume.

11. The battery cell 100 according to any one of the previous claims, wherein the gasket 135 comprises:
a ring body 1357 forming a communication hole into which the terminal portion 130 is inserted; and
a first groove portion 1351 formed in a groove shape in the ring body 1357 along a circumferential direction of the communication hole, the first groove portion 1351 being configured to receive the first sealing portion 137.

12. The battery cell 100 according to claim 11, further comprising a ring-shaped second sealing portion 138 disposed between the terminal portion 130 and the gasket 135,
wherein the gasket 135 further comprises a second groove portion 1352 formed in a groove shape in the ring body 1357 along a circumferential direction of the communication hole, the second groove portion being formed in parallel with the first groove portion 1351 and configured to receive the second sealing portion 138.
